# DEMANDE DE BREVET EUROPEEN

(11) **EP 1 041 799 A1**
(43) Date de publication de la demande: **04.10.2000**
(21) Numéro de dépôt: 00460020.1
(22) Date de dépôt: 09.03.2000
(51) Int. Cl.: H04M 1/247, H04Q 7/32

(54) **Terminal téléphonique permettant la gestion de l'accès à des services prédéterminés**

(30) Priorité: 01.04.1999 FR 9904293
(71) Demandeur: Societé Francaise du Radiotéléphone, 92915 Paris la Défence (FR)
(72) Inventeur: De Kermadec, Alain, 75007 Paris (FR)
(74) Mandataire: Vidon, Patrice

(57) **Abrégé**

L'invention concerne un terminal téléphonique comprenant des moyens d'accès à des services prédéterminés, organisés sous la forme d'une table unique (44) associant à chacun desdits services au moins un numéro d'appel et/ou un identifiant correspondant(s).

Selon l'invention, le terminal téléphonique comprend des moyens de présentation arborescente desdits services, sous la forme d'au moins un premier menu (50) permettant l'accès à des sous-menus (51 à 54), au moins certains desdits sous-menus contenant un sous-ensemble desdits services.

## Description

Le domaine de l'invention est celui des télécommunications, notamment des radiocommunications.

Plus précisément, l'invention concerne la gestion de l'accès à des services prédéterminés depuis un terminal téléphonique.

Le terminal téléphonique de l'invention peut notamment, mais non exclusivement, être un radiotéléphone (ou terminal mobile, ou ME pour "Mobile Equipment" en anglais selon la terminologie GSM pour "Global System for Mobile communications" en anglais) par exemple compatible avec un système de radiocommunication de type GSM, DCS 1800 (pour "Digital Cellular System 1800 MHz" en anglais), PCS 1900 (pour "Personal Communication System" en anglais), DECT (pour "Digital European Cordless Telecommunications" en anglais), ou encore UMTS (pour "Universal Mobile Telecommunication System" en anglais).

On suppose, dans la suite de la présente description, que le terminal téléphonique est du type comprenant des moyens d'accès à des services prédéterminés. Parmi les services ainsi accessibles à l'usager, on peut citer, uniquement à titre d'exemple, les services de réservation (hôtel, avion, train, spectacles, ...).

Classiquement, les moyens d'accès aux services sont organisés sous la forme d'une table unique, dite table des services, associant à chacun des services au moins un numéro d'appel et un identifiant. Le numéro d'appel d'un service donné est généralement le numéro de téléphone de moyens distants (serveurs, répondeurs, standards téléphoniques classiques, etc) offrant ce service donné. Quant aux identifiants de services, il s'agit généralement des noms abrégés donnés à ces services (tels que par exemple "réservation hôtel", "réservation cinéma", ...).

Selon les normes actuelles, l'usager peut visualiser le contenu de la table de services sur l'écran du terminal, sous la forme d'un menu unique et figé, dit menu des services. Ce menu des services comporte une pluralité d'items, c'est-à-dire d'options susceptibles d'être activées sélectivement par l'utilisateur, chaque option correspondant dans le cas présent à l'un des services répertoriés dans la table des services.

Actuellement, lorsqu'il souhaite accéder à l'un des services, l'usager doit repérer l'item correspondant dans le menu des services, puis sélectionner l'item repéré. Typiquement, l'étape de repérage est effectuée par défilement (ou "scrolling" en anglais) des items à l'écran, grâce à des touches de déplacement (par exemple deux touches de déplacement, vers le haut et le bas respectivement). Chaque item est généralement visualisé sous la forme d'une définition ou d'une description qui apparaît sur une fenêtre active de l'écran (par exemple en regard d'un repère). Cette définition ou cette description peut être soit une indication verbale (ce que signifie éthymologiquement le terme "item"), telle que le nom du service correspondant, soit une icône ou un autre type de représentation figurative renvoyant systématiquement à l'option sélectionnable. L'étape de sélection de l'item repéré est par ailleurs généralement effectuée grâce à une touche de sélection.

La sélection d'un service donné au sein du menu des services provoque automatiquement l'établissement d'un appel avec comme numéro de téléphone appelé celui associé, dans la table des services, à ce service donné. En d'autres termes, après que l'utilisateur a sélectionné un service, le numéro de téléphone de ce service est fourni automatiquement, en tant que numéro à composer, aux moyens d'accès aux services, afin que ceux-ci établissent la communication demandée.

A titre d'exemple, on rappelle que dans un radiotéléphone mobile au standard GSM, une telle table (ou agenda) des services existe et est appelée "table SDN" (pour "Service Dialling Numbers" en anglais). Elle contient la liste des numéros de téléphone des services offerts aux abonnés par l'opérateur du réseau téléphonique et/ou par un offreur de services tiers ayant passé un contrat avec l'opérateur. Elle est stockée dans le module d'identification d'abonné (ou carte SIM selon la terminologie GSM) avec lequel coopère le radiotéléphone. Généralement, l'opérateur préenregistre la table SDN dans le module d'identification d'abonné. Eventuellement, il peut par la suite la mettre à jour à distance, tandis que le module d'identification d'abonné coopère avec le radiotéléphone de l'abonné. La table SDN associe à chaque service : un nom, un numéro de téléphone, une possibilité d'extension pour les très longs numéros et une possibilité de stocker des chaînes de commande de services supplémentaires. Les détails d'implantation de la table (ou fichier) SDN dans le module d'identification d'abonné sont donnés dans la norme "GSM 11.11" de l'ETSI (qui est insérée ici par référence). Dans la pratique actuelle, la table SDN permet à l'usager d'accéder à environ quarante services différents. Seul l'opérateur est généralement habilité à modifier ou mettre à jour le contenu de la table SDN.

La technique actuelle de présentation et de sélection des services répertoriés dans la table des services, qui est basée sur l'utilisation d'un menu des services unique et figé, présente plusieurs inconvénients.

Tout d'abord, il apparaît que le temps de repérage et de sélection d'un service est relativement long, ce qui se traduit par une perte de temps pour l'utilisateur. En effet, le nombre d'items (c'est-à-dire de services) compris dans le menu des services est largement supérieur au nombre d'items pouvant être affichés simultanément sur l'écran du terminal. Typiquement, un écran de terminal téléphonique comporte généralement trois ou quatre lignes (et permet donc d'afficher autant d'items), alors que le menu des services peut généralement comprendre jusqu'à quarante services distincts. Par conséquent, l'accès et la sélection d'un service donné nécessitent fréquemment le parcours intégral du menu des services, c'est-à-dire d'une longue liste d'items.

En outre, la présentation sous la forme d'une longue liste unique ne permet pas à l'utilisateur d'avoir une bonne perception globale de l'ensemble des services qui lui sont offerts. Notamment, il visualise rarement les services arrivant en dernière position dans le menu. En d'autres termes, il peut avoir quelques difficultés à mémoriser l'ensemble des services existants, ou même ignorer l'existence de certains services. Cette méconnaissance, voire cette ignorance, l'empêche d'utiliser certains services qui correspondent pourtant probablement à ses besoins.

Par ailleurs, l'accès aux différents services n'est pas uniforme. En effet, l'utilisateur accède plus difficilement à certains services, savoir ceux dont les items apparaissent les derniers dans le menu des services. Cette non-uniformité est gênante pour l'opérateur qui gère l'ensemble des services, puisque certains services se trouvent défavorisés et risquent d'être moins utilisés.

Il est à noter que, dans le cas où le terminal téléphonique est un radiotéléphone, certains des services proposés par l'opérateur sont en fait sous-traités à des offreurs de services tiers ayant passé un contrat avec l'opérateur. L'opérateur a alors des difficultés à persuader les offreurs de services tiers de voir leurs items (c'est-à-dire leurs services) occuper, au sein du menu des services, des emplacements défavorisés, c'est-à-dire se trouvant en fin de menu et donc non visibles directement à l'écran.

L'invention a notamment pour objectif de pallier ces différents inconvénients de l'état de la technique.

Plus précisément, l'un des objectifs de l'invention est de fournir un terminal téléphonique, ainsi qu'un procédé de gestion de l'accès à des services depuis un tel terminal téléphonique, permettant à un usager de sélectionner un service plus aisément et plus rapidement qu'avec la technique actuelle décrite ci-dessus.

L'invention a également pour objectif de fournir un tel terminal téléphonique et un tel procédé permettant à l'utilisateur d'avoir une bonne perception globale de l'ensemble des services qui lui sont offerts.

Ces différents objectifs, ainsi que d'autres qui apparaîtront par la suite, sont atteints selon l'invention à l'aide d'un terminal téléphonique comprenant des moyens d'accès à des services prédéterminés, organisés sous la forme d'une table unique associant à chacun desdits services au moins un numéro d'appel et/ou un identifiant correspondant(s), ledit terminal comprenant des moyens de présentation arborescente desdits services, sous la forme d'au moins un premier menu permettant l'accès à des sous-menus, au moins certains desdits sous-menus contenant un sous-ensemble desdits services.

Le principe général de l'invention consiste donc à remplacer le menu unique et figé de l'art antérieur par un structure arborescente comprenant une pluralité de sous-menus contenant les services. De cette façon, pour prendre connaissance de l'ensemble des services existants ou pour sélectionner un service donné, l'utilisateur ne parcourt pas une longue liste de services mais "navigue" dans la structure arborescente, ce qui est beaucoup plus rapide et convivial.

Il est à noter qu'il peut exister plusieurs "premiers menus", correspondant chacun au niveau hiérarchique de référence (niveau n) pour un groupe de sous-menus distinct. En outre, chaque "premier menu" peut lui-même être un sous-menu d'un niveau hiérarchique supérieur (n+1,...).

Au sein de la structure arborescente selon l'invention, les sous-menus peuvent être tous regroupés dans un unique niveau hiérarchique (niveau n-1). Dans ce cas, tous les sous-menus sont accessibles à partir du premier menu.

Selon une variante de réalisation, les sous-menus peuvent être répartis parmi plusieurs niveaux hiérarchiques (niveaux n-1, n-2, n-3, ...) au sein de la structure arborescente. Dans ce cas, au moins certains sous-menus comprennent au moins deux types d'items, à savoir d'une part des services et d'autre part des commandes de navigation au sein de la structure arborescente (telles que, par exemple, une commande de retour au menu ou sous-menu de niveau supérieur, et une commande de passage au menu ou sous-menu de niveau inférieur).

Dans un mode de réalisation particulier de l'invention, l'appui sur une unique touche du clavier assure directement l'accès audit premier menu. On considère ici que ledit terminal téléphonique est du type comprenant un clavier présentant un jeu de touches et un écran permettant notamment la visualisation de menus.

Ainsi, l'utilisateur accède aisément au premier menu.

De façon avantageuse, lesdits sous-menus ne présentent pas de ligne vide, lesdits services n'apparaissant dans le sous-menu correspondant que lorsqu'ils sont effectivement présents dans ladite table unique.

De cette façon, on améliore la convivialité des sous-menus et on optimise l'accessibilité aux services effectivement offerts.

Préférentiellement, ladite table unique est mise à jour par téléchargement, les données correspondantes étant transmises à l'aide de messages courts.

Ainsi, de façon très simple, l'utilisateur peut se voir proposer en permanence des nouveaux services ou des versions améliorées de services existants. Ceci permet également de supprimer certains services. La mise à jour par téléchargement peut même être effectuée de façon transparente pour l'utilisateur, grâce par exemple à des messages courts de signalisation et/ou de maintenance propres à l'opérateur. On rappelle par ailleurs que les messages courts sont généralement appelés SMS (pour "Short Message Service" selon la terminologie anglaise GSM).

De façon préférentielle, lesdits sous-menus sont mis à jour automatiquement, dès que ladite table unique est complétée et/ou modifiée. Il est à noter qu'une modification peut consister en un masquage ou démasquage de certains services, si l'utilisateur modifie son abonnement ou devient abonné après avoir été un « client prépayé ».

De cette façon, l'utilisateur est sûr que les sous-menus qu'il parcourt afin d'identifier et sélectionner un service représentent une image exacte de l'ensemble des services réellement présents dans la table des services.

Préférentiellement, au moins un des sous-menus appartient au groupe comprenant : un sous-menu "découvrir", un sous-menu "partir", un sous-menu "réagir" et un sous-menu "gérer".

Chacun de ces sous-menus comprend des services liés à un même thème, ce qui facilite la recherche par l'utilisateur d'un service donné. Il est clair que d'autres sous-menus thématiques peuvent être envisagés, sans sortir du cadre de l'invention. Il est clair également que chacun de ces sous-menus thématiques peut éventuellement lui-même permettre l'accès à d'autres sous-menus correspondant chacun à un sous-thème distinct.

Dans un mode de réalisation particulier de l'invention, le terminal téléphonique est un radiotéléphone.

Préférentiellement, lesdits moyens de gestion desdits menus sont au moins partiellement présents dans un support de données amovible destiné à être inséré dans un lecteur correspondant dudit terminal.

Un tel support de données amovible est par exemple un module d'identification d'abonné. On rappelle que, selon les normes en vigueur, un radiotéléphone (ou terminal mobile, ou encore ME, pour "Mobile Equipment" selon la terminologie GSM) coopère, grâce à des moyens de lecture et/ou écriture adéquats, avec un module d'identification d'abonné (ou SIM, pour "Subscriber Identity Module" selon la terminologie GSM, ou encore DAM, pour "DECT Authentication Module" selon la terminologie DECT).

Dans ce cas, le premier menu selon la présente invention peut donc être un "menu opérateur" proposant indirectement, via les sous-menus auxquels il donne accès, des services gérés par le module d'identification d'abonné. On distingue en effet généralement deux types de menus disponibles sur un radiotéléphone, à savoir :
- les "menus constructeur", proposant des fonctionnalités (fonctions et/ou services) gérées par le terminal téléphonique (telles que par exemple le réglage de l'intensité lumineuse de l'écran du terminal). Le contenu des "menus constructeur" dépend donc du constructeur du terminal ;
- les "menus opérateur", proposant des fonctionnalités (fonctions et/ou services) gérées par le module d'identification d'abonné (telles que par exemple l'accès à des serveurs de services distants propres à l'opérateur et/ou à un offreur de services tiers ayant passé un contrat avec l'opérateur). Le contenu des "menus opérateur" dépend donc de l'opérateur ayant distribué ce module d'identification d'abonné et/ou de l'offreur de services tiers. Les opérateurs tentent bien sûr de proposer un choix maximal de fonctionnalités au sein de leurs "menus opérateurs".

Dans le cas du GSM, l'accès à des "menus opérateur" suppose généralement que le terminal et le module d'identification d'abonné supportent l'application normalisée (ou boîte à outils logicielle) appelée "SIM Application Toolkit", telle que décrite en détail dans les normes "GSM 11.11, GSM 11.14 et GSM 11.14 (Phase 2+)" de l'ETSI (qui sont insérées ici par référence). Le module d'identification d'abonné 4 est alors qualifié de "proactive SIM", selon la terminologie GSM. En résumé, le "SIM Application Toolkit" est un jeu de commandes et de procédures (protocoles) permettant au module d'identification d'abonné 4 de gérer des fonctionnalités en "prenant la main" (à la place du terminal) et en envoyant des commandes au terminal 3. Dans le cas présent, le module d'identification d'abonné (ou "proactive SIM") gère l'accès au premier menu ("menu opérateur") et aux sous-menus correspondants, ainsi que la sélection par l'utilisateur d'un des services proposés dans ces sous-menus.

L'invention concerne également un procédé de gestion de l'accès à des services prédéterminés depuis un terminal téléphonique, lesdits services prédéterminés étant organisés sous la forme d'une table unique associant à chacun desdits services au moins un numéro d'appel et/ou un identifiant correspondant(s), ce procédé comprenant une étape de présentation arborescente desdits services, sous la forme d'au moins un premier menu permettant l'accès à des sous-menus, au moins certains desdits sous-menus contenant un sous-ensemble desdits services.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma simplifié d'un mode de réalisation particulier d'un terminal téléphonique selon l'invention, mettant en oeuvre une présentation arborescente des services contenus dans une table des services ;
- la figure 2 illustre un premier mode de réalisation particulier de la structure arborescente des services selon l'invention, et les liens entre cette structure et la table des services ; et
- la figure 3 illustre un second mode de réalisation particulier de la structure arborescente des services selon l'invention, et les liens entre cette structure et la table des services.

L'invention concerne donc l'accès à des services à partir d'un terminal téléphonique.

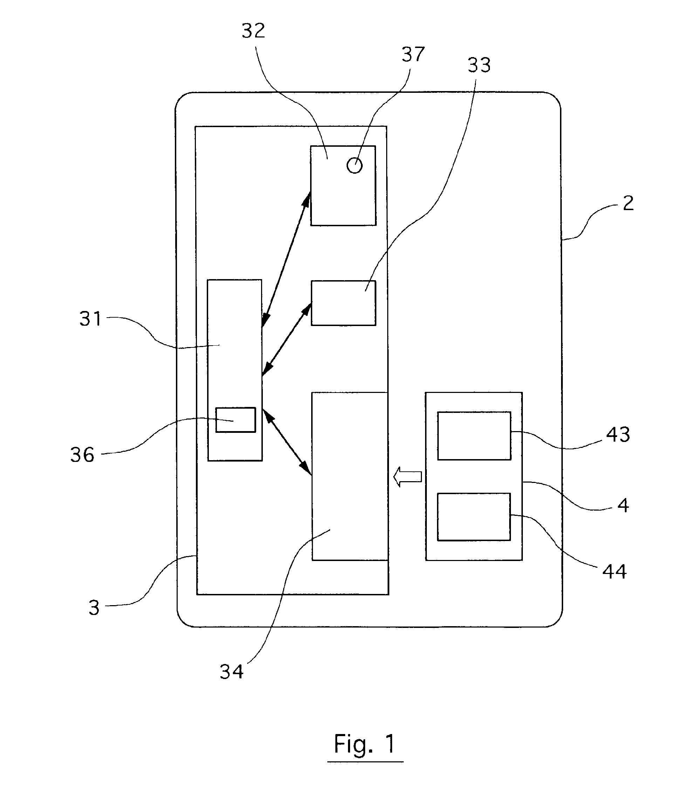

Dans la suite de la description, et comme cela apparaît sur la figure 1, on considère que le terminal téléphonique est un radiotéléphone mobile 3, par exemple de type GSM. Il est clair cependant que l'invention n'est nullement limitée à ce type de terminal téléphonique, et s'applique également à un terminal téléphonique fixe ou à un téléphone sans fil.

On rappelle qu'un radiotéléphone mobile 3 (ou ME, pour "Mobile Equipment", selon la terminologie GSM) coopère selon les normes actuelles avec un module d'identification d'abonné 4 (ou SIM, pour "Subscriber Identity Module", selon la terminologie GSM). On appelle "station mobile" 2 (ou MS, pour "Mobile Station", selon la terminologie GSM) l'ensemble constitué du terminal 3 et du module d'identification d'abonné 4. Pour plus de précisions sur chacun de ces éléments 3 et 4, on pourra se reporter aux normes "GSM 11.11 et GSM 11.14 (Phase 2+)" de l'ETSI, qui sont insérées ici par référence.

De façon classique, le terminal 3 comprend une pluralité d'éléments coopérant entre eux, tels que notamment un microprocesseur 31, un écran d'affichage 32, un clavier 33 et un lecteur de module d'identification d'abonné 34.

Egalement de façon classique, le radiotéléphone mobile 3 comprend des moyens 36 d'accès à des services prédéterminés. Ces moyens 36 d'accès à des services prédéterminés sont par exemple compris dans le microprocesseur 31 du terminal 3.

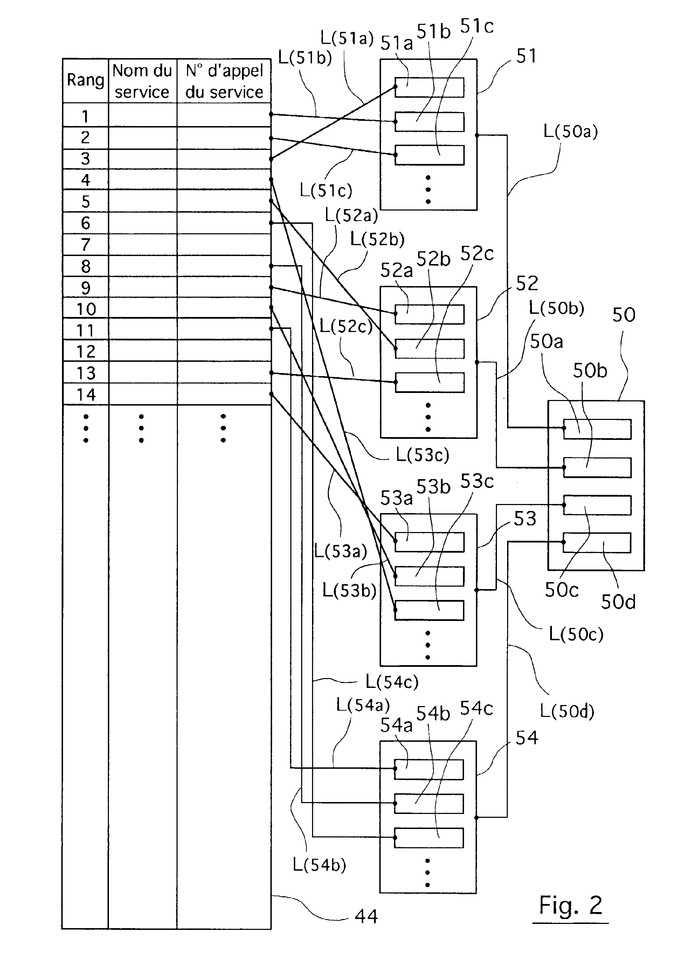

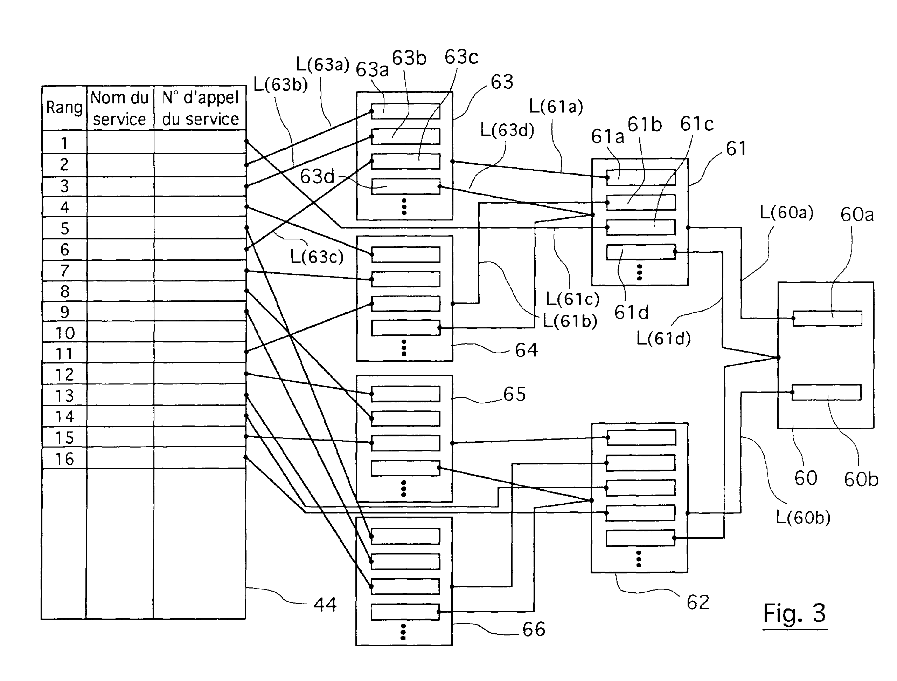

On suppose que ces services sont organisés sous la forme d'une table unique, associant à chacun des services un numéro d'appel et un nom correspondants. Sur les figures 2 et 3, on a représenté schématiquement cette table des services 44, en faisant également apparaître le rang de chaque service dans la table 44.

Dans le cas d'un radiotéléphone mobile de type GSM, la table des services 44 est par exemple l'agenda des services, appelé "SDN" (pour "Service Dialling Numbers" en anglais). La table SDN 44 peut être stockée sur le terminal 3 ou sur le module d'identfication d'abonné 4. Elle est mise à jour par l'opérateur. Pour plus de précisions sur cette table SDN 44, on pourra se reporter aux normes "GSM 02.07, GSM 11.11 et GSM 11.14 (Phase 2+)" de l'ETSI, qui sont insérées ici par référence.

La présente invention porte précisément sur une nouvelle technique de présentation des services à l'utilisateur. A cet effet, la présente invention prévoit que le radiotéléphone comprend, par exemple dans le module d'identification d'abonné 4, des moyens 43 de présentation arborescente des services, sous la forme d'au moins un premier menu permettant l'accès à des sous-menus. Les services sont répartis dans les sous-menus, et accessibles à partir de ceux-ci.

Si l'on souhaite éviter que les sous-menus présentent des lignes vides, seuls les services effectivement présents dans la table des services 44 apparaissent dans les sous-menus.

Optionnellement, on prévoit une touche particulière 37 du clavier 32, assurant directement l'accès au premier menu lorsqu'elle est pressée par l'utilisateur.

Plusieurs solutions peuvent être envisagées pour la mise à jour de la table des services 44 par l'opérateur, telles que la mise à jour par téléchargement. Dans ce cas, les données de mise à jour sont par exemple transmises à l'aide de messages courts (SMS). Après chaque mise à jour de la table des services 44, il convient (par exemple automatiquement) de mettre à jour en conséquence les sous-menus.

On présente maintenant, en relation avec la figure 2, un premier mode de réalisation particulier de la structure arborescente des services selon l'invention, ainsi que les liens entre cette structure et la table des services.

Dans ce premier mode de réalisation, la structure arborescente des services se présente sous la forme d'un premier menu 50 comprenant quatre items 50a, 50b, 50c et 50d, permettant chacun l'accès à l'un de quatre sous-menus "découvrir" 51, "partir" 52, "réagir" 53 et "gérer" 54, par l'intermédiaire de quatre liens L(50a), L(50b), L(50c) et L(50d).

Le sous-menu "découvrir" 51 comprend une pluralité d'items 51a, 51b, 51c, etc, permettant chacun la sélection d'un des services contenus dans la table des services 44. Dans l'exemple illustré exemple, les trois premiers items 51a, 51b et 51c permettent la sélection respectivement des services de rang 3, 1 et 2, par l'intermédiaire des liens référencés L(51a), L(51b), L(51c).

Les services accessibles à partir du sous-menu "découvrir" 51 sont par exemple les suivants : actualités, météo, cinéma, spectacles, restaurants, horoscope, idées,...

Le sous-menu "partir" 52 comprend une pluralité d'items 52a, 52b, 52c, etc, permettant chacun la sélection d'un des services contenus dans la table des services 44. Dans l'exemple illustré, les trois premiers items 52a, 52b et 52c permettent la sélection respectivement des services de rang 9, 5 et 13, par l'intermédiaire des liens référencés L(52a), L(52b), L(52c).

Les services accessibles à partir du sous-menu "partir" 52 sont par exemple les suivants : taxi, réservations, informations sur trafic,...

Le sous-menu "réagir" 53 comprend une pluralité d'items 53a, 53b, 53c, etc, permettant chacun la sélection d'un des services contenus dans la table des services 44. Dans l'exemple illustré, les trois premiers items 53a, 53b et 53c permettent la sélection respectivement des services de rang 14, 10 et 4, par l'intermédiaire des liens référencés L(53a), L(53b), L(53c).

Les services accessibles à partir du sous-menu "réagir" 53 sont par exemple les suivants : forum, dialogue,...

Le sous-menu "gérer" 54 comprend une pluralité d'items 54a, 54b, 54c, etc, permettant chacun la sélection d'un des services contenus dans la table des services 44. Dans l'exemple illustré, les trois premiers items 54a, 54b et 54c permettent la sélection respectivement des services de rang 11, 8 et 6, par l'intermédiaire des liens référencés L(54a), L(54b), L(54c).

Les services accessibles à partir du sous-menu "gérer" 54 sont par exemple les suivants : banque, bourse, change,...

Selon une variante, non illustrée, le sous-menu "réagir" est situé, dans l'arborescence, sous un autre premier menu.

On présente maintenant, en relation avec la figure 3, un second mode de réalisation particulier de la structure arborescente des services selon l'invention, ainsi que les liens entre cette structure et la table des services.

Dans ce second mode de réalisation, la structure arborescente des services se présente sous la forme d'un premier menu 60, de niveau n, comprenant deux items 60a et 60b, permettant chacun l'accès à l'un de deux sous-menus 61 et 62, de niveau n-1, par l'intermédiaire de deux liens L(60a) et L(60b).

Le sous-menu de niveau n-1 référencé 61 comprend lui-même une pluralité d'items, à savoir notamment :
- deux items permettant chacun l'accès à l'un de deux sous-menus 63 et 64, de niveau n-2, par l'intermédiaire de deux liens L(61a) et L(61b);
- (au moins) un item 61c permettant la sélection d'un des services contenus dans la table des services 44. Dans l'exemple illustré, il s'agit du service de rang 1, par l'intermédiaire du lien référencé L(61c) ;
- un item 61d permettant le retour au premier menu 60, de niveau n, par l'intermédiaire d'un lien L(61d).

Le sous-menu de niveau n-2 référencé 63 comprend lui-même une pluralité d'items, à savoir notamment :
- une pluralité d'items 63a, 63b, 63c, etc, permettant chacun la sélection d'un des services contenus dans la table des services 44. Dans l'exemple illustré, les trois premiers items 63a, 63b et 63c permettent la sélection respectivement des services de rang 2, 3 et 6, par l'intermédiaire des liens référencés L(63a), L(63b), L(63c) ;
- un item 63d permettant le retour au sous-menu 61, de niveau n-1, par l'intermédiaire d'un lien L(63d).
A l'aide de la figure 3, et à la lecture de ce qui précède concernant le sous-menu référencé 63, on déduit aisément le contenu du sous-menu de niveau n-2 référencé 64. De même, à l'aide de la figure 3, et à la lecture de ce qui précède concernant les sous-menus référencés 61 (niveau n-1) et 63 (niveau n-2), on déduit aisément le contenu des sous-menus référencés 62 (niveau n-1) et 65 et 66 (niveau n-2). Ces sous-menus référencés 62, 64, 65 et 66 ne sont donc pas décrits plus en détail.

La structure arborescente de ce second mode de réalisation diffère donc de celle du premier mode de réalisation décrit ci-dessus essentiellement en ce que :
- elle comprend un niveau supplémentaire de sous-menus ;
- certains items permettent de passer d'un sous-menu à un autre sous-menu (de niveau inférieur ou supérieur) ;
- certains items de niveau intermédiaire (n-1) permettent directement la sélection d'un service contenu dans la table des services.

Il est clair que de nombreux autres modes de réalisation de l'invention peuvent être envisagés. On peut notamment prévoir :
- des items permettant de monter ou descendre directement d'au moins deux niveaux (par exemple du niveau n-2 au niveau n, ou inversement);
- un nombre différent de sous-menu dans chaque niveau n-1, n-2,... ;
- un nombre différent de niveau de sous-menu (avec par exemple un niveau intermédiaire supplémentaire n-3) ;
- etc

On présente maintenant plusieurs techniques permettant de sélectionner d'un item au sein d'un menu.

Selon une technique classique, la visualisation et la sélection d'un item compris dans un menu (ou sous-menu) s'effectuent par défilement (ou "scrolling" en anglais) des items, par lequel la définition ou la description des items apparaît sur une fenêtre active à l'écran (par exemple en regard d'un repère ou équivalent). Cette définition ou cette description peut être soit une indication verbale (ce que signifie éthymologiquement le terme "item"), soit une icône ou un autre type de représentation figurative renvoyant systématiquement à l'option sélectionnable. L'utilisateur du terminal téléphonique peut faire apparaître et défiler (par exemple face à un repère fixe) sur l'écran de visualisation du terminal téléphonique, les items, en appuyant sur une ou plusieurs touche(s) de déplacement prévue(s) sur le clavier. On prévoit par exemple deux touches de déplacement assurant respectivement un déplacement vers le haut et vers le bas. L'utilisateur peut ensuite appuyer sur une touche permettant la sélection de l'item correspondant. On rappelle que dans le cadre de la présente invention, la sélection d'un item permet soit de sélectionner un service contenu dans la table des services 44, soit de passer à un autre menu ou sous-menu.

Selon une variante, la sélection d'un item compris dans un menu (ou sous-menu) s'effectue grâce à la technique décrite dans le demande de brevet ayant pour titre "Terminal téléphonique pourvu de moyens de gestion de la visualisation de menus et procédé correspondant" déposée le même jour que la présente demande et par la même Déposante. Cette technique consiste à affecter une ou plusieurs touches directement à au moins certains des items. L'application de cette technique à la présente invention implique que le terminal téléphonique comprenne des moyens de gestion des menus, affectant sélectivement à au moins certain(s) des items des menu(s) et sous-menus au moins une touche du clavier. L'appui sur une des touches affectées (ou simultanément sur plusieurs touches affectées) assure directement la sélection de l'item correspondant.

## Revendications

1. Terminal téléphonique (3) comprenant des moyens (36) d'accès à des services prédéterminés, organisés sous la forme d'une table unique (44) associant à chacun desdits services au moins un numéro d'appel et/ou un identifiant correspondant(s),
caractérisé en ce qu'il comprend des moyens (43) de présentation arborescente desdits services, sous la forme d'au moins un premier menu (50 ; 60) permettant l'accès à des sous-menus (51 à 54 ; 61 à 66), au moins certains desdits sous-menus contenant un sous-ensemble desdits services.

2. Terminal téléphonique selon la revendication 1, ledit terminal téléphonique comprenant un clavier (32) présentant un jeu de touches et un écran (33) permettant notamment la visualisation de menus, caractérisé en ce que l'appui sur une unique touche (37) dudit clavier assure directement l'accès audit premier menu.

3. Terminal téléphonique selon l'une quelconque des revendications 1 et 2, caractérisé en ce que lesdits sous-menus (51 à 54 ; 61 à 66) ne présentent pas de ligne vide, lesdits services n'apparaissant dans le sous-menu correspondant que lorsqu'ils sont effectivement présents dans ladite table unique.

4. Terminal téléphonique selon l'une quelconque des revendications 1 à 3, caractérisé en ce que ladite table unique (44) est mise à jour par téléchargement, les données correspondantes étant transmises à l'aide de messages courts.

5. Terminal téléphonique selon l'une quelconque des revendications 1 à 4, caractérisé en ce que lesdits sous-menus (51 à 54 ; 61 à 66) sont mis à jour automatiquement, dès que ladite table unique est complétée et/ou modifiée.

6. Terminal téléphonique selon l'une quelconque des revendications 1 à 5, caractérisé en ce qu'au moins un des sous-menus appartient au groupe comprenant :
- un sous-menu "découvrir" (51) ;
- un sous-menu "partir" (52) ;
- un sous-menu "réagir" (53) ;
- un sous-menu "gérer" (54).

7. Terminal téléphonique selon l'une quelconque des revendications 1 à 6, caractérisé en ce qu'il s'agit d'un radiotéléphone (3).

8. Terminal téléphonique selon l'une quelconque des revendications 1 à 7, caractérisé en ce que lesdits moyens (43) de gestion desdits menus sont au moins partiellement présents dans un support de données amovible (4) destiné à être inséré dans un lecteur correspondant (34) dudit terminal.

9. Procédé de gestion de l'accès à des services prédéterminés depuis un terminal téléphonique, lesdits services prédéterminés étant organisés sous la forme d'une table unique associant à chacun desdits services au moins un numéro d'appel et/ou un identifiant correspondant(s),
caractérisé en ce qu'il comprend une étape de présentation arborescente desdits services, sous la forme d'au moins un premier menu permettant l'accès à des sous-menus, au moins certains desdits sous-menus contenant un sous-ensemble desdits services.
